# EUROPEAN PATENT SPECIFICATION

(11) **EP 1 184 581 B1**
(45) Date of publication and mention of the grant of the patent: **02.04.2008**
(21) Application number: 01307484.4
(22) Date of filing: 03.09.2001
(51) Int. Cl.: F16B 31/04

(54) **Threaded fastener**
Befestigungsmittel mit Gewinde
Dispositif de fixation fileté

(30) Priority: 05.09.2000 US 655530
(43) Date of publication of application: 06.03.2002
(73) Proprietor: Junkers, John K., Saddle River, New Jersey 07458 (US)
(72) Inventor: Junkers, John K., Saddle River, New Jersey 07458 (US)
(74) Representative: Hanson, William Bennett

(56) References cited:
- EP-A- 0 940 590
- US-A- 4 201 110
- US-A- 5 341 560
- US-A- 5 640 749

## Description

This invention relates to threaded fasteners, such as bolts, nuts and the like.

Threaded fasteners are known which include a bolt and a nut which has at least one sleeve and a washer. Such fasteners are disclosed, for example, in EP-A-0940590, US-A-5,341,560 and US-A-5,640,749. There are three types of threaded fasteners, namely a first type in which the washer is connected to the inner sleeve of a two-sleeve nut via splines; a second type in which the washer is spline-connected to the bolt; and a third type in which the washer is not connected to the inner sleeve, and the reaction force of the tool is applied simultaneously to the washer and to the inner sleeve, or to the washer and to the bolt head.

A threaded fastener in which the washer is connected via splines either to the inner sleeves or to the bolt is relatively expensive to manufacture since it requires the provision of both an outer spline and an inner spline. Manufacture of the nut when the washer is not connected to the inner sleeve or the bolt is less expensive, but has the disadvantage that the washer needs connecting means on the outside for the tool to apply a reaction force to it, which is also costly. In addition, the latter needs two reaction drives, one for the inner sleeve or the bolt end and one for the washer, which also increases its cost relative to the other type where merely one action and reaction drive is required.

Accordingly, it is an object of present invention to provide a threaded connection of the above mentioned general type which avoids the disadvantages of the prior art.

In keeping with these objects and with others which will become apparent hereinafter, there is provided, according to the present invention, a threaded fastener as claimed in the ensuing claim 1.

When the threaded fastener is designed in accordance with the present invention, the washer has a round, or cylindrical, preferably circular cylindrical, inner female opening, so that the washer can be press-fitted onto a similarly shaped male portion of the other part of the threaded connector. For example, the washer may be press-fitted on an outer cylindrical surface of the inner sleeve or an outer cylindrical portion of a non-threaded porion of the bolt. The manufacturing cost of the nut means of the threaded connector in accordance with the present invention is about 25% less than the manufacturing cost for a nut of threaded connector having a spline connection and about 15% less than that of a nut that requires two reaction shafts, since the outer diameter of the washer can be round.

The nut means may comprise an outer sleeve and an inner sleeve, the active force being applied to the outer sleeve, while the opposite reactive force can be applied either to the inner sleeve or to the outside of the washer. In the latter case the connecting means on the inner sleeve for the reactive drive is not needed.

The novel features which are considered as characteristic for the present invention are set forth in particular in the appended claims. The invention itself, however, both as to its construction and its method of operation, will be best understood from the following description of specific embodiments when read in connection with the accompanying drawings, in which:
Figure 1 is a view showing a threaded fastener in accordance with a first embodiment of the present invention;
Figure 2 is a view showing a threaded fastener in accordance with a second embodiment of the present invention;
Figure 3 is a view showing a threaded fastener in accordance with the a embodiment of present invention; and
Figure 4 is a view showing a threaded fastener in accordance with a fourth embodiment of the present invention.

A threaded fastener in accordance with the present invention has a stud or bolt 1 arranged in an outside object 2 which can be one element of a two-element assembly to be connected together by the threaded fastener. The threaded fastener further has nut means comprising an inner sleeve 3, an outer sleeve 4 and a washer 5. The inner sleeve 3 has an inner screw-thread in which the bolt 1 is screwed and is movable only in an axial direction. The outer sleeve 4 has an inner screw-thread which engages with an outer screw thread of the inner sleeve 3 and is turnable around an axis. The outer sleeve 4 has a lower bearing face which abuts against an upper face of the washer 5. A lower face of the washer 5 abuts against the element 2.

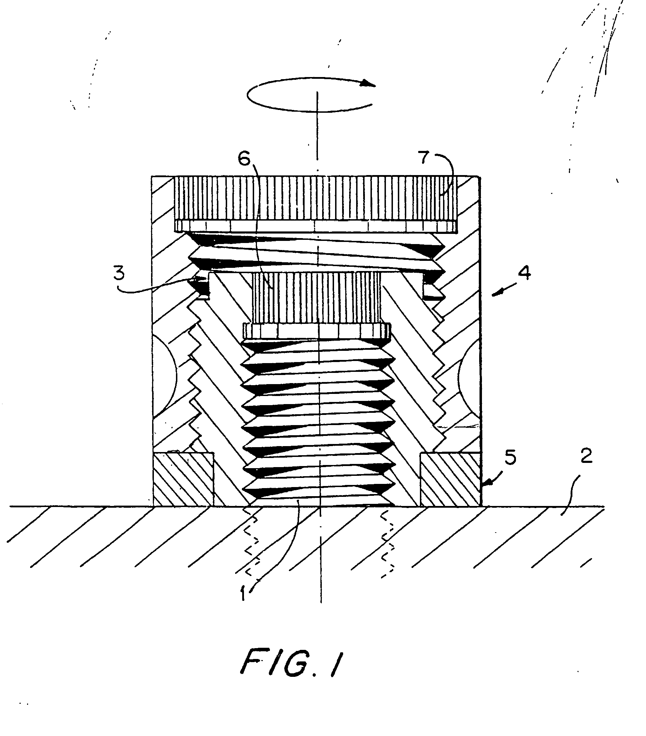

In the embodiment shown in Figure 1 the inner sleeve 3 is provided with engaging formations 6 formed, for example, as inner splines provided in an inner opening of the inner sleeve 3. The outer sleeve 4 also has engaging formations 7 formed, for example, as splines provided in an inner opening of the outer sleeve 4.

In accordance with the present invention, the washer 5 is press-fitted on the inner sleeve 3. In particular, the inner generally cylindrical, preferably circular cylindrical, surface of the washer 5 is press-fitted on the outer generally cylindrical, preferably circular cylindrical, surface of the inner sleeve- 3. The press: fit is designed in use to prevent the washer turning relative to the inner sleeve 3, but to allow the inner sleeve 3 to move relative to the washer 5 in an axial direction. The press fit may, for example, comprise an interference fit.

During operation an active force is applied by a power tool via the engaging formations 7 of the outer sleeve 4 and a reactive force is applied via the engaging formation 6 to the inner sleeve 3, so that the outer sleeve 4 turns about the axis. The inner sleeve 3, which is non-rotabably connected with the washer 5, does not turn but instead is displaced in an axial direction. As a result the bolt 1 is pulled by the inner sleeve 3 in the axial direction as well, so that the parts of the two-part assembly are pulled and tightened together.

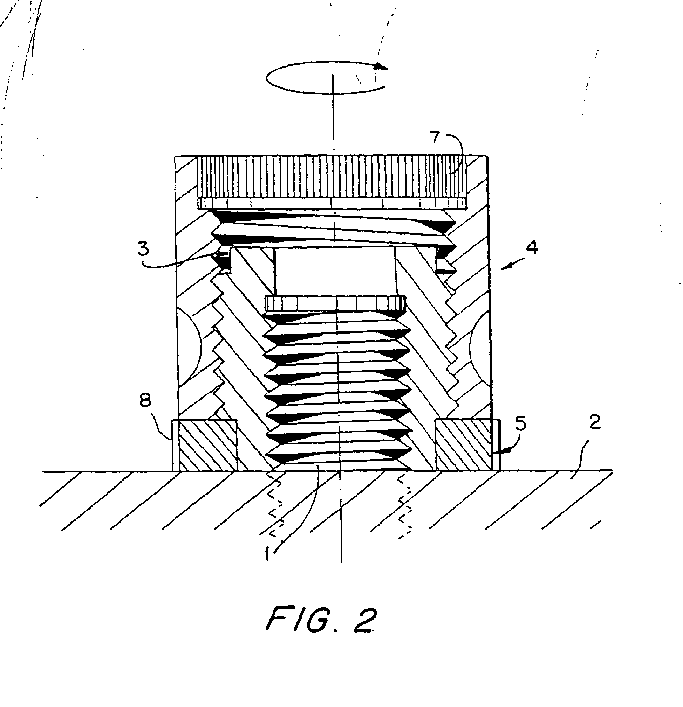

In the embodiment shown in Figure 2 the nut means also has an inner sleeve 3, an outer sleeve 4 and a washer 5. However no engaging means is provided on the inner sleeve 3, the engaging means instead being provided on the washer 5. The engaging means can be formed, for example, as splines 8 on the outer surface of the washer 5.

During operation, when an active force is applied via the engaging means 7 to the outer sleeve 4 and a reactive force is applied via the engaging means 8 by a power tool to the washer 5, the outer sleeve 4 is turned. The inner sleeve 3, which is non-rotatably connected with the washer 5, does not turn but instead is displaced in an axial direction. The bolt 1 is also displaced in an axial direction so as to tighten the two-element assembly.

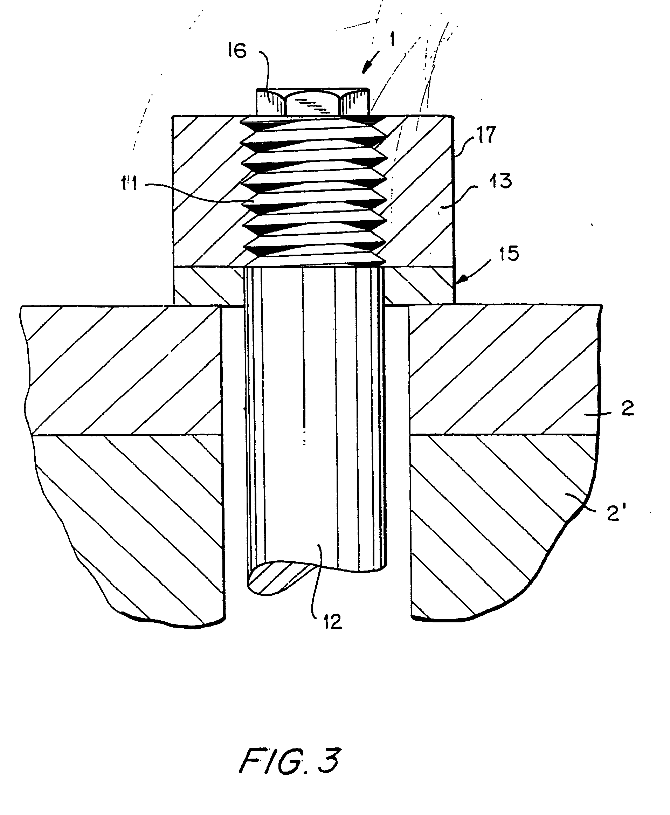

In the embodiment shown in Figure 3 the nut means includes a single sleeve 13 and a washer 15. The bolt 1 has a screw-threaded portion 11, with an outer screw-thread engaging with an inner screw-thread of the sleeve 13, and a generally cylindrical non-threaded portion 12. In this embodiment the washer 15 is press-fitted onto the non-threaded portion 12- of the bolt 1. More particularly, an inner round surface of the washer 15 is press-fitted on the outer generally cylindrical surface of the non-threaded portion 12 of the bolt 1. The bolt 1 is provided with an engaging formation 16 formed, for example, as a. polygonal head, while the sleeve 13 is also provided with an engaging formation formed, for example, as a polygonal outer surface 17.

During operation when an active force is applied to the sleeve 13 via the engaging formation 17 and a reactive force is applied to the bolt 1 via the engaging formation 16, the sleeve 13 is turned. The bolt 1, which is non-rotatably connected with the washer 15, does not turn but is displaced in an axial direction. The bolt 1, in cooperation with its opposite end, pulls the elements 2 and 2' together.

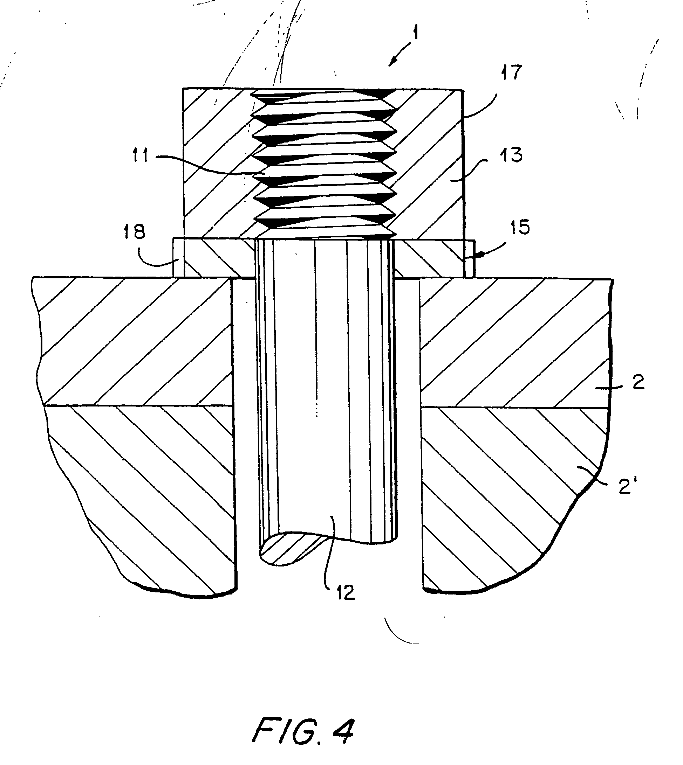

The threaded connector of the embodiment shown in Figure 4 is substantially similar to the embodiment shown in Figure 3. However, here the bolt 1 is not provided with engaging means. Instead second engaging means 18 are provided on the washer 15 and can be formed, for example, as splines on the outer surface of the washer 15.

During operation when an active force is applied to the outer sleeve 13 via the engaging formation 17 and a reactive force is applied to the washer 15 via the engaging formation 18, the sleeve 13 is turned about the axis. The washer 15 remains stationary and the bolt 1, which is non-rotatably connected with the washer 15 by means of its press-fit therewith, does not rotate and instead is displaced in an axial direction so as to tighten the elements 2 and 2' of the two-element assembly.

## Claims

1. A threaded fastener comprising a bolt (1); nut means including at least one sleeve (3,4) with which said bolt (1) is screw-threadedly engaged; and a washer (5) having a lower bearing surface which abuts against a surface of one (2) of at least two elements (2,2') to be connected together by the threaded fastener, **characterised in that** said washer (5) is press-fitted on the at least one sleeve (3) or on the bolt (1) so that when a circumferential active force and a circumferential opposite reactive force are applied to parts of the threaded fastener, the washer does not turn and the bolt also does not turn but moves only in an axial direction.

2. A threaded fastener according to claim 1, wherein said nut means comprises an inner sleeve (3) and an outer sleeve (4) which are screw-threadedly connected together, said outer sleeve (4) having a face which bears against an upper bearing face of said washer (5), said inner sleeve (3) and said outer sleeve (4) being provided with means (6,7) for applying said circumferential active force and said circumferential reactive force correspondingly, said washer (5) being a press-fit on said inner sleeve (3).

3. A threaded fastener according to claim 1, wherein said nut means comprises an inner sleeve (3) and an outer sleeve (4) screw-threadedly connected together, said outer sleeve (4) and said washer (5) having means (7,8) for applying said circumferential active force and said circumferential reactive force correspondingly, said washer (5) being a press fit on said inner sleeve (3).

4. A threaded fastener according to claim 1, wherein said bolt (1) has a screw-threaded portion (11) and a non-threaded portion (12), said washer (15) being a press-fit on said non-threaded portion (12) of said bolt, said at least one sleeve (13) and said bolt (1) being provided with means (16,17) for applying said circumferential active force and said circumferential reactive force correspondingly.

5. A threaded fastener according to claim 1, wherein said bolt (1) has a screw-threaded portion (11) and a non-threaded portion (12), said washer (15) being a press-fit on said non-threaded portion (12) of said bolt, said at least one sleeve (13) and said washer (15) being provided with means (17,18) for applying said circumferential active force and said circumferential reactive force correspondingly.

## Patentansprüche

1. Gewindetes Befestigungsmittel, mit einem Bolzen (1); einem Mutterelement, das zumindest eine Hülse (3, 4), mit der der Bolzen (1) in Eingriff steht, umfasst; und einer Scheibe (5), die eine untere Kontaktoberfläche aufweist, die an einer Oberfläche von einem (2) von zumindest zwei von dem gewindeten Befestigungsmittel zu befestigenden Elementen (2, 2') anliegt, **dadurch gekennzeichnet, dass** die Scheibe (5) eine Presspassung mit der zumindest einen Hülse (3) oder dem Bolzen (1) bildet, so dass dann, wenn eine in Umfangsrichtung wirkende Kraft und eine entgegengesetzt in Umfangsrichtung rückwirkende Kraft auf Teile des gewindeten Befestigungsmittels aufgebracht werden, die Scheibe sich nicht dreht und der Bolzen sich ebenfalls nicht dreht, sondern lediglich in einer axialen Richtung bewegt.

2. Gewindetes Befestigungsmittel nach Anspruch 1, wobei das Mutterelement eine innere Hülse (3) und eine äußere Hülse (4), die miteinander in Eingriff stehen, umfasst, wobei die äußere Hülse (4) eine Fläche aufweist, die an der oberen Kontaktoberfläche der Scheibe (5) anliegt, wobei die innere Hülse (3) und die äußere Hülse (4) mit Mitteln (6, 7) zum entsprechenden Aufbringen der in Umfangsrichtung wirkenden Kraft und der in Umfangsrichtung rückwirkenden Kraft versehen ist, wobei die Scheibe (5) eine Presspassung mit der inneren Hülse (3) bildet.

3. Gewindetes Befestigungsmittel gemäß Anspruch 1, wobei das Mutterelement eine innere Hülse (3) und eine äußere Hülse (4), die miteinander in Eingriff stehen, umfasst, wobei die äußere Hülse (4) und die Scheibe (5) Mittel (7, 8) zum entsprechenden Aufbringen der in Umfangsrichtung wirkenden Kraft und der in Umfangsrichtung rückwirkenden Kraft umfassen, wobei die Scheibe (5) eine Presspassung mit der inneren Hülse (3) bildet.

4. Gewindetes Befestigungsmittel nach Anspruch 1, wobei der Bolzen (1) einen gewindeten Abschnitt (11) und einen nicht-gewindeten Abschnitt (12) hat, wobei die Scheibe (15) eine Presspassung mit dem nicht-gewindeten Abschnitt (12) des Bolzens bildet, wobei die zumindest eine Hülse (13) und der Bolzen (1) mit einem Mittel (16, 17) zum entsprechenden Aufbringen jeweils entsprechend der in Umfangsrichtung wirkenden Kraft und der in Umfangsrichtung rückwirkenden Kraft versehen ist.

5. Gewindetes Befestigungsmittel nach Anspruch 1, wobei der Bolzen (1) einen gewindeten Abschnitt (11) und einen nicht-gewindeten Abschnitt (12) hat, wobei die Scheibe (15) eine Presspassung mit dem nicht-gewindeten Abschnitt (12) des Bolzens bildet, wobei die zumindest eine Hülse (13) und die Scheibe (15) mit einem Mittel (17,18) zum entsprechenden Aufbringen jeweils der in Umfangsrichtung wirkenden Kraft und der in Umfangsrichtung rückwirkenden Kraft versehen ist.

## Revendications

1. Elément de fixation fileté comprenant un boulon (1), un moyen d'écrou comprenant au moins un manchon (3, 4) avec lequel ledit boulon (1) est engagé par vissage, et une rondelle (5) comportant une surface de support inférieure qui bute contre une surface de l'un (2) d'au moins deux éléments (2, 2') devant être reliés ensemble par l'élément de fixation fileté, **caractérisé en ce que** ladite rondelle (5) est ajustée serré sur le au moins un manchon (3) ou sur le boulon (1) de sorte que lorsqu'une force active circonférentielle et une force réactive opposée circonférentielle sont appliquées à des parties de l'élément de fixation fileté, la rondelle ne tourne pas et le boulon ne tourne pas non plus mais se déplace uniquement dans une direction axiale.

2. Elément de fixation fileté selon la revendication 1, dans lequel ledit moyen d'écrou comprend un manchon intérieur (3) et un manchon extérieur (4) qui sont reliés par vissage ensemble, ledit manchon extérieur (4) comportant une face qui porte contre une face de support supérieure de ladite rondelle (5), ledit manchon intérieur (3) et ledit manchon extérieur (4) étant dotés d'un moyen (6, 7) destiné à appliquer ladite force active circonférentielle et ladite force réactive circonférentielle de façon correspondante, ladite rondelle (5) étant ajustée serré sur ledit manchon intérieur (3).

3. Elément de fixation fileté selon la revendication 1, dans lequel ledit moyen d'écrou comprend un manchon intérieur (3) et un manchon extérieur (4) reliés par vissage ensemble, ledit manchon extérieur (4) et ladite rondelle (5) comportant un moyen (7, 8) pour appliquer ladite force active circonférentielle et ladite force réactive circonférentielle de façon correspondante, ladite rondelle (5) étant ajustée serré sur ledit manchon intérieur (3).

4. Elément de fixation fileté selon la revendication 1, dans lequel ledit boulon (1) présente une partie filetée (11) et une partie non filetée (12), ladite rondelle (15) étant ajustée serré sur ladite partie non filetée (12) dudit boulon, ledit au moins un manchon (13) et ledit boulon (1) étant dotés d'un moyen (16, 17) destiné à appliquer ladite force active circonférentielle et ladite force réactive circonférentielle de façon correspondante.

5. Elément de fixation fileté selon la revendication 1, dans lequel ledit boulon (1) comporte une partie filetée (11) et une partie non filetée (12), ladite rondelle (15) étant ajustée serré sur ladite partie non filetée (12) dudit boulon, ledit au moins un manchon (13) et ladite rondelle (15) étant dotés d'un moyen (17, 18) destiné à appliquer ladite force active circonférentielle et ladite force réactive circonférentielle de façon correspondante.
